# EUROPEAN PATENT APPLICATION

(11) **EP 3 848 585 A1**
(43) Date of publication of application: **14.07.2021**
(21) Application number: 21150351.1
(22) Date of filing: 06.01.2021
(51) Int. Cl.: F04B 49/025, F04B 49/04, G01F 23/32

(54) **FUEL DELIVERY MODULE**

(30) Priority: 07.01.2020 GB 202000145
(71) Applicant: Delphi Automotive Systems Luxembourg SA, 4940 Bascharage (LU)
(72) Inventor: MARX, Patrice, 54650 Saulnes (FR); VENERUCCI, David, 54720 Lexy (FR)
(74) Representative: Allain, Michel Jean Camille

(57) **Abstract**

A fuel delivery module for an automotive vehicle, arranged to be immerged in a fuel tank, comprising a fuel level sensor (12) comprising a floating member (14) and a floating arm (16) connected to the floating member (14), said floating member (14) being arranged to float in the fuel tank (T) from a lowest position (L) when a quantity of fuel in the fuel tank (T) is minimal to a highest position (H), when a quantity of fuel in the fuel tank (T) is maximal, the floating arm (16) being mounted to rotate on the floating member (14), when the fuel delivery module (10) comprises contact surfaces (52, 54) against which the floating arm (16) abuts in the lowest position (L) and in the highest position (H) to limit the rotation of the floating member (16).

## Description

### TECHNICAL FIELD

The present invention relates to a fuel delivery module provided with an optimized fuel level sensor.

### BACKGROUND OF THE INVENTION

A fuel delivery module is known to be immerged in the fuel tank of an automotive vehicle. Such a module comprises a fuel level sensor provided with a floating member and a floating arm connected to the floating member. In use, the floating member floats on the surface of the fuel contained in the tank, the fuel level being deduced from the position of the floating member.

However, there is a loosen height of measurable fuel caused by the movement of floating member when the level of fuel changes from a lowest position, when the level of fuel in the tank is minimal to a highest position, when the level of fuel in the tank is maximal.

### SUMMARY OF THE INVENTION

Accordingly, it is an object of the present invention to resolve the above-mentioned problem in providing a fuel delivery for an automotive vehicle, arranged to be immerged in a fuel tank, comprising a fuel level sensor comprising a floating member and a floating arm connected to the floating member, said floating member being arranged to float in the fuel tank from a lowest position when a quantity of fuel in the fuel tank is minimal to a highest position, when a quantity of fuel in the fuel tank is maximal, the floating arm being mounted to rotate on the floating member, when the module comprises contact surfaces against which the floating arm abuts in the lowest position and in the highest position to limit the rotation of the floating member.

Thanks to the claimed module, the movement of the floating member in its trajectory between the lowest position and highest position is limited, which ensures a gain in the measurable fuel height and avoids any risk of contact between the floating member and the fuel tank.

The contact surfaces may comprise a first contact surface and a second contact surface, the first and second contact surfaces intersecting to form an acute angle.

The acute angle may be comprised between 40° and 60°, preferably 55°.

The floating member may comprise a cavity to receive a portion of the floating arm.

The contact surfaces may be carried by the floating member.

The fuel delivery module may comprise an insert fixed to the floating member, said insert carrying the contact surfaces.

The insert may comprise a tubular hollow portion arranged to receive a portion of the floating arm, the cavity of the floating member being arranged to house said tubular hollow portion.

### BRIEF DESCRIPTION OF THE DRAWINGS

The present invention is now described by way of example with reference to the accompanying drawings in which:
Figure 1 is a schematic view of a fuel delivery module as per the present invention comprising a floating member shown in a lowest position and in a highest position.
Figure 2 is a perspective view of the device of the floating member of figure 1 as per another embodiment of the invention.
Figure 3 is a perspective view of the device of the floating member of figure 1.

### DESCRIPTION OF THE PREFERRED EMBODIMENTS

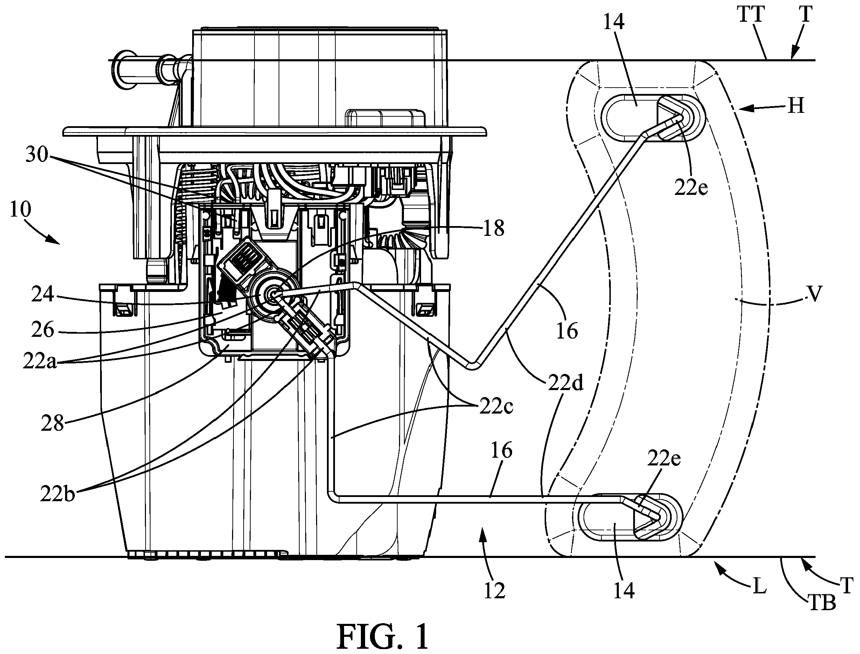

As illustrated in the figures, the present invention is about a fuel delivery module 10 arranged to be immerged in a fuel tank T of an automotive vehicle. Bottom and top surfaces TB and TT are shown in figure 1.

The module 10 comprises a fuel level sensor 12 provided with a floating member 14 arranged to float on the surface of the fuel in the fuel tank. The floating member is made of a low density material, like foam.

As illustrated in figure 1, the floating member 14 is able to move between a lowest position L to a highest position H when the level of fuel changes. The lowest position L corresponds to a minimal quantity of the fuel contained in the fuel tank whereas the highest position H corresponds to a maximal quantity of fuel.

The floating member comprises a cavity C to receive the floating arm 16, as will be described later.

The fuel level sensor 14 also comprises a floating arm 16 extending from a first end 18 to a second end 20. The floating arm 16 is composed of a plurality of straight portions 22a to 22g between the first end 18 and the second end 20.

As shown in figure 1, the first end 18 is connected to a resistive element 24 able to rotate against a ceramic card 26 supported by a pad 28. A current is applied to the ceramic card 26 through wires 30.

The portion 22f of the floating arm 16 extends in the cavity C of the floating member 14 to connect the floating member 14 and the floating arm 16.

As will be detailed later, when the fuel level varies, the movement of the floating member causes a rotation of the floating arm 16, and the resistive element 24 slides on the ceramic card, which modifies the resistance of the ceramic card 26. The resistance is preferably comprised between 50 Ω to 350 Ω but the invention is not limited to this range.

Hence, the fuel level is determined by the value of the resistance of the ceramic card.

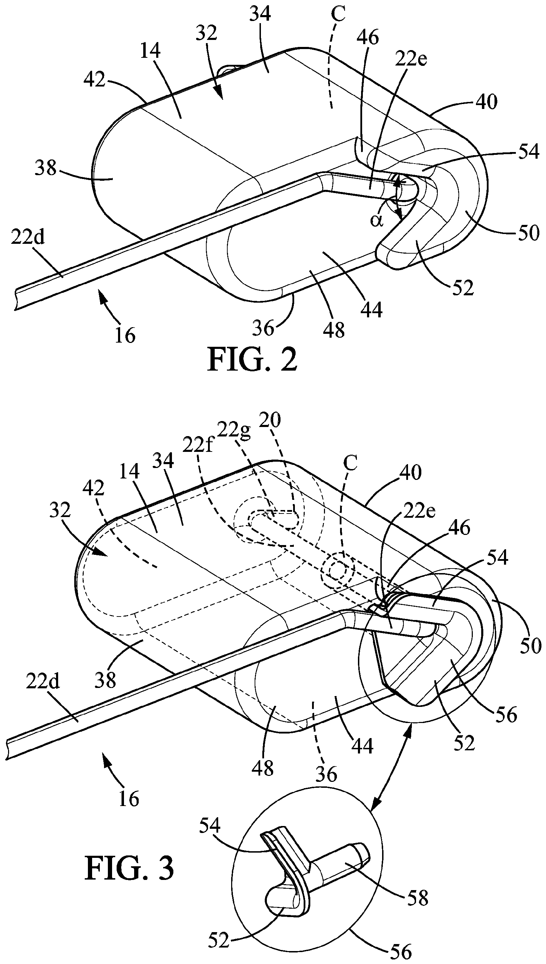

The floating member 14 is now detailed in reference to the embodiment of figure 2.

As can be seen from this figure, the floating member 14 has an oblong section, a longitudinal wall 32 comprising opposite flat portions 34, 36 and curved portions 38, 40. The longitudinal wall 32 extends between a flat bottom end 42 and a top end 44. The top end 44 comprises a step 46 between a first surface 48 and a second surface 50. The height of the step is around 5 to 6 mm.

As shown in figure 2, the second surface 50 comprises two contact surfaces 52, 54 against which the floating arm 16 abuts in the lowest position L and in the highest position H.

In the lowest position L, the portion 22e abuts against the contact surface 52 while in the highest position H, the portion 22e abuts against the contact surface 54.

Hence, the contact surfaces 52, 54 limit the rotation of the floating member 14.

The contact surfaces 52, 54 intersect to form an acute angle α. Preferably, the angle α is around 55°. The angle α corresponds to the angle of the ceramic card to ensure a consistency between the position of the floating member and the resistance of the ceramic card.

The floating member 14 is now detailed in reference to a second embodiment, illustrated in figure 3.

As can be seen from this figure, the floating member 14 has an oblong section, a longitudinal wall 32 comprising opposite flat portions 34, 36 and curved portions 38, 40. The longitudinal wall 32 extends between a flat bottom end 42 and a top end 44. The top end 44 comprises a step 46 between a first surface 48 and a second surface 50. The height of the step is around 5 to 6 mm.

As shown in figure 3, the fuel level sensor comprises an insert 56 fixed to the first and second surfaces 48, 50. The insert 56 comprises two contact surfaces 52, 54 against which the floating arm 16 abuts in the lowest position L and in the highest position H. The insert could be made of a plastic material.

In the lowest position L, the portion 22e abuts against the contact surface 52 while in the highest position H, the portion 22e abuts against the contact surface 54.

Hence, the contact surfaces 52, 54 limit the rotation of the floating member 14.

As can be seen from figure 3, the insert 56 also comprises a tubular hollow portion 58 to receive a portion of the floating arm 16, the cavity C of the floating member 14 being arranged to house said tubular hollow portion 58.

The contact surfaces 52, 54 intersect to form an acute angle α. Preferably, the angle α is around 55°. The angle α corresponds to the angle of the ceramic card to ensure a consistency between the position of the floating member and the resistance of the ceramic card.

As can be understood from figure 1, thanks to the limitation of the movement of the floating member, in the lowest position L as well as in the highest position H, the floating member 14 is oriented such that the flat portion 34, 36 extend parallel to the bottom and top surfaces TB and TS of the fuel tank T.

A virtual volume V encompassing the volume of the floating member 14 throughout its trajectory between the lowest and highest positions L, H, to which volume is added a supplementary volume to avoid any contact between the floating member and the fuel tank, is therefore minimal. Thus, a measurable fuel height Hl that is lost is reduced compared to the prior art, and the fuel delivery module can be very compact.

### LIST OF REFERENCES

- T: fuel tank
- TB: bottom surface
- TT: top surface
- L: lowest position
- H: highest position
- C: cavity
- α: angles between contact surfaces
- V: virtual volume

- 10: fuel delivery module
- 12: fuel level sensor
- 14: floating member
- 16: floating arm
- 18: first end
- 20: second end
- 22a, g: straight portions
- 24: resistive element
- 26: ceramic card
- 28: pad
- 30: wire
- 32: longitudinal wall
- 34: flat portion
- 36: flat portion
- 38: curved portion
- 40: curved portion
- 42: bottom end
- 44: top end
- 46: step
- 48: first surface
- 50: second surface
- 52: contact surface
- 54: contact surface
- 56: insert
- 58: tubular hollow portion

## Claims

1. A fuel delivery module for an automotive vehicle, arranged to be immerged in a fuel tank, comprising a fuel level sensor (12) comprising a floating member (14) and a floating arm (16) connected to the floating member (14), said floating member (14) being arranged to float in the fuel tank (T) from a lowest position (L) when a quantity of fuel in the fuel tank (T) is minimal to a highest position (H), when a quantity of fuel in the fuel tank (T) is maximal, the floating arm (16) being mounted to rotate on the floating member (14), when the fuel delivery module (10) comprises contact surfaces (52, 54) against which the floating arm (16) abuts in the lowest position (L) and in the highest position (H) to limit the rotation of the floating member (16).

2. The module as per claim 1, wherein the contact surfaces (52, 54) comprise a first contact surface (52) and a second contact surface (54), the first and second contact surfaces intersecting to form an acute angle (α).

3. The module as per claim 2, wherein the acute angle (α) is comprised between 40° and 60°, preferably 55°.

4. The module as per anyone of the preceding claims, wherein the floating member (14) comprises a cavity (C) to receive a portion (22f) of the floating arm (16).

5. The module as per anyone of the preceding claims, wherein the contact surfaces (52, 54) are carried by the floating member (14).

6. The module as per anyone of claims 1-4, comprising an insert (56) fixed to the floating member (14), said insert (56) carrying the contact surfaces (52, 54).

7. The module as per claim 6 when depending as per claim 4, wherein the insert (56) comprises a tubular hollow portion (58) arranged to receive a portion of the floating arm (16), the cavity (C) of the floating member (14) being arranged to house said tubular hollow portion (58).
